# EUROPEAN PATENT APPLICATION

(11) **EP 3 674 348 A1**
(43) Date of publication of application: **01.07.2020**
(21) Application number: 18215997.0
(22) Date of filing: 31.12.2018
(51) Int. Cl.: C08G 73/10, C08L 79/08

(54) **PHOSPHONIUM BROMIDE TERMINATED POLYIMIDE WITH HIGH TENSILE PROPERTIES**

(71) Applicant: SABIC Global Technologies B.V., 4612 PX Bergen op Zoom (NL)
(72) Inventor: Odle, Roy Ray, Mt. Vernon, IN Indiana 47620 (US); Liu, Guoliang, Blacksburg, VA Virginia 24061 (US); Long, Timothy Edward, Blacksburg, VA Virginia 24061 (US); Cao, Ke, Blacksburg, VA Virginia 24061 (US)
(74) Representative: Balder IP Law, S.L.

(57) **Abstract**

A polyimide oligomer of the formula 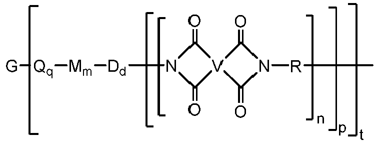 wherein G is a group having a valence of t and is connected by a covalent bond or an ionic bond, each Q is independently the same or different, and is a cation or a substituted or unsubstituted divalent C₁₋₆₀ hydrocarbon group, each M is independently the same or different, and is a substituted or unsubstituted divalent C₁₋₆₀ hydrocarbon group, -O-, -C(O)-, -OC(O)-, -OC(O)O-, -NHC(O)-, -(O)CNH-, -S-, -S(O)-, or -S(O)₂-, D is a phenylene, each V is independently the same or different, and is a tetravalent C₄₋₄₀ hydrocarbon group, each R is independently the same or different, and is a C₁₋₂₀ divalent bridging group, a C₁₋₂₀ alkylene-X, or a C₆₋₃₀ arylene-XA wherein XA is a cation-anion complex, provided that at least one R is C₁₋₂₀ alkylene-XA or C₆₋₃₀ arylene-XA, q, m, d, p, t, and n are as provided herein.

## Description

### BACKGROUND

Polyimides (PIs), and in particular polyetherimides (PEIs), are amorphous, transparent, high performance polymers having a high glass transition temperature. Polyetherimides further have high strength, heat resistance, and modulus, and broad chemical resistance, and thus are widely used in applications as diverse as automotive, telecommunication, aerospace, electrical/electronics, transportation, and healthcare. Moreover, PEIs can be recycled, whereas some PIs are thermosets that cannot be recycled.

Accordingly, there remains a continuing need for thermoplastic polyimides and polyetherimides that have high thermal stability, flame retardancy, and superior mechanical properties.

### SUMMARY

Provided is a polyimide oligomer of the formula 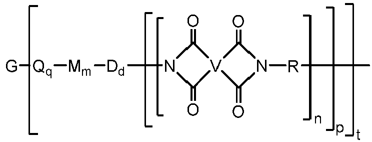 wherein G is a group having a valence of t and is connected by a covalent bond or an ionic bond, each Q is independently the same or different, and is a cation or a substituted or unsubstituted divalent C₁₋₆₀ hydrocarbon group, each M is independently the same or different, and is a substituted or unsubstituted divalent C₁₋₆₀ hydrocarbon group, -O-, -C(O)-, -OC(O)-, -OC(O)O-, -NHC(O)-, -(O)CNH-, -S-, -S(O)-, or -S(O)₂-, D is a phenylene, each V is independently the same or different, and is a tetravalent C₄₋₄₀ hydrocarbon group, each R is independently the same or different, and is a C₁₋₂₀ divalent bridging group, a C₁₋₂₀ alkylene-X, or a C₆₋₃₀ arylene-XA wherein XA is a cation-anion complex, provided that at least one R is C₁₋₂₀ alkylene-XA or C₆₋₃₀ arylene-XA, q is 0 or 1, m is 0 or 1, d is 0 or 1, p is 1 or 2, t is 1 to 6, and each n is independently the same or different, and is 1 to 1,000, preferably 2 to 500, more preferably 3 to 100, provided that the total of all values of n is greater than 4, or greater than 10, or greater than 20, or greater than 50, or greater than 100, or greater than 250.

Also provided is a method for the manufacture of the polyimide oligomer comprising reacting a diamine of the formula H₂N-R¹-NH₂ with a dianhydride of the formula 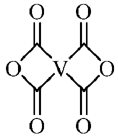 and optionally a polyamine of the formula 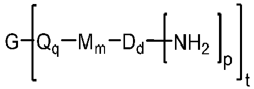 in a solvent and under conditions effective to provide an anhydride-capped oligomer; and reacting the anhydride-capped oligomer with an amino compound of the formula H₂N-R² under conditions effective to provide the polyimide oligomer, wherein R¹ is a C₁₋₂₀ divalent bridging group, and R² is a C₁₋₂₀ alkylene-XA or a C₆₋₃₀ arylene-XA wherein XA is a cation-anion complex.

Another method is for the manufacture of the polyetherimide oligomer comprising reacting a diamine of the formula H₂N-R¹-NH₂ with an anhydride of the formula 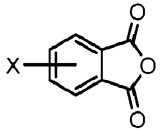 and optionally a polyamine of the formula 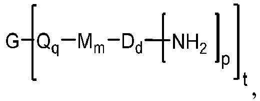 wherein X is a nitro group or halogen, to provide intermediate bis(phthalimide)s of the formulas 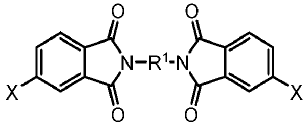 and optionally 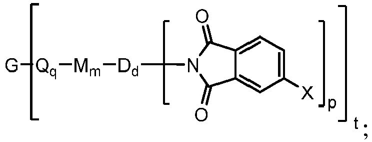 reacting the bis(phthalimide)s with an alkali metal salt of a dihydroxy aromatic compound of the formula AMO-Z-OAM wherein AM is an alkali metal, to provide an anhydride-capped oligomer; and reacting the anhydride-capped oligomer with an amino compound of the formula H₂N-R² under conditions effective to provide the polyetherimide oligomer, wherein R¹ is a C₁₋₂₀ divalent bridging group, and R² is a C₁₋₂₀ alkylene-X or a C₆₋₃₀ arylene-XA wherein XA is a cation-anion complex.

A polymer composition, article comprising the polyimide oligomer, and method for manufacturing the article are also provided.

The above described and other features are exemplified by the following figures, detailed description, and examples.

### BRIEF DESCRIPTION OF THE DRAWINGS

The following figures are exemplary aspects.
FIG. 1 is a graph weight (wt%) versus temperature (°C) for PEI oligomers.
FIG. 2 is a graph of modulus (G' or G", MPa) versus angular frequency (radians per second, rad/s) showing flow properties for PEI oligomers.
FIG. 3 is a graph of complex viscosity (η*, Pascal second, Pa·s) versus angular frequency (rad/s) for PEI oligomers.
FIG. 4 is a graph of storage modulus (Pa) versus frequency (Hertz, Hz) for PEI oligomers.

### DETAILED DESCRIPTION

Mechanical strength, thermal stability, and flame retardancy are three desirable characteristics of polyetherimide (PEI) for use in, for example, aviation and aerospace industries. Although higher molecular-weight (high-MW) PEIs inherently possess flame retardancy because of the high carbon content and high aromaticity, the flame retardancy of lower molecular-weight PEIs can be limited. To overcome these difficulties, the present inventors have discovered that simultaneous enhancement of the tensile strength, thermal stability, and flame retardancy is achieved by incorporating thermally stable quaternary tetraphenylphosphonium bromide end groups into telechelic PEI oligomers.

Provided herein are polyimides (PIs) and PEIs having terminal groups including cation-anion complexes that can be prepared by polymerizing a dianhydride, a diamine, and optionally a poly-functional aryl amine (polyamine), and subsequent endcapping of the intermediate product with a quaternary tetraphenylphosphonium bromide amine compound or a metalated amine compound. The method provides linear and branched oligomers having end caps that include quaternary tetraphenylphosphonium bromide groups. For example, the synthesized PIs and PEIs terminated with quaternary tetraphenylphosphonium bromide exhibit superior melt stability, mechanical properties, rheological properties, and flame retardancy.

The polyimide oligomer is of formula (1) 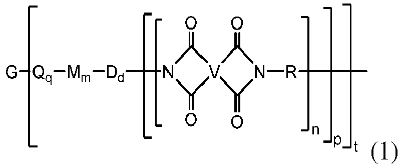 wherein G is a group having a valence of t and is connected by a covalent bond or an ionic bond, q is 0 or 1, m is 0 or 1, d is 0 or 1, p is 1 or 2, and t is 1 to 6. G can be an anion, -O-, -C(O)-, - OC(O)-, -(O)CO-, -NHC(O)-, -(O)CNH-, -S-, -S(O)-, -S(O)₂-, -P(R^{a})(O)- wherein R^{a} is a C₁₋₈ alkyl or C₆₋₁₂ aryl, or a substituted or unsubstituted C₁₋₆₀ hydrocarbon group having a valence of t. For example, t is 2 and G is -O-, -C(O)-, -OC(O)-, -(O)CO-, -NHC(O)-, -(O)CNH-, -S-, - S(O)-, -S(O)₂-, -P(R^{a})(O)- wherein R^{a} is a C₁₋₈ alkyl or C₆₋₁₂ aryl, or a substituted or unsubstituted divalent C₁₋₂₀ hydrocarbon group such as a substituted or unsubstituted C₁₋₂₀ alkylene, a substituted or unsubstituted C₃₋₈ cycloalkylene, a substituted or unsubstituted C₆₋₂₀ arylene, or a substituted or unsubstituted C₃₋₁₂ heteroarylene.

In certain aspects, G can be an anion. Exemplary anions include Cl⁻, Br⁻, I⁻, a substituted or unsubstituted (C₁₋₂₄ hydrocarbyl)carboxylate, HCO₃⁻, CO₃²⁻, CH₃SO₄⁻, HSO₄⁻, SO₄²⁻, H₂PO₄⁻, HPO₄²⁻, PO₄³⁻, NO₃⁻, p-toluenesulfonate, bis(trifluoromethanesulfonyl)imide, or a combination thereof. When G is an anion, it is connected to group Q, M, or D by an ionic bond, although the ionic nature of the bonding is not depicted in formula (1) for convenience.

When G is a branching group, the polyimide can include from 0.01 to 20 mole percent (mol%), or 0.1 to 20 mol%, or 0.5 to 10 mol%, or 1.0 to 5 mol%, or 1.5 to 4 mol% of G end groups, based on the total moles of repeating units in the oligomer. More specifically, the polyimide can include from 0.01 to 20 of diimide units containing G end groups, based on the total moles of repeating diimide units in the polyimide oligomer.

Each n is independently the same or different, and is 1 to 1,000, preferably 2 to 500, more preferably 3 to 100, provided that the total of all values of n is greater than 4, or greater than 10, or greater than 20, or greater than 50, or greater than 100, or greater than 250.

Each Q is independently the same or different, and is a cation or a substituted or unsubstituted divalent C₁₋₆₀ hydrocarbon group. For example, t is 1 to 3, G is an anion, and Q is a substituted or unsubstituted tris(C₁₋₂₄ hydrocarbyl)ammonium, a substituted or unsubstituted tris(C₁₋₂₄ hydrocarbyl)phosphonium, or a substituted or unsubstituted bis(C₁₋₂₄ hydrocarbyl)sulfonium. More specifically, d is 1, t is 1 to 3, m is 0, G is an anion, and Q is a substituted or unsubstituted tris(C₆₋₂₄ aryl)ammonium, or a substituted or unsubstituted tris(C₆₋₂₄ aryl)phosphonium. In another specific example, m is 1, d is 0, t is 1 to 3, G is an anion, and Q is a substituted or unsubstituted tris(C₁₋₁₂ alkyl)ammonium, a substituted or unsubstituted tris(C₆₋₂₄ aryl)ammonium, a substituted or unsubstituted tris(C₁₋₁₂ alkyl)phosphonium, or a substituted or unsubstituted tris(C₆₋₂₄ aryl)phosphonium. In another example, t is 1 to 3, d is 0, G is an anion, and Q is a substituted or unsubstituted imidazolium, a substituted or unsubstituted guanidinium, or a substituted or unsubstituted pyridinium. More specifically, d is 0, t is 1 to 3, m is 0, G is an anion, and Q is a substituted or unsubstituted imidazolium, a substituted or unsubstituted guanidinium, or a substituted or unsubstituted pyridinium.

Each R is independently the same or different, and is a C₁₋₂₀ divalent bridging group, a C₁₋₂₀ alkylene-X, or a C₆₋₃₀ arylene-XA wherein XA is a cation-anion complex, provided that at least one R is C₁₋₂₀ alkylene-XA or C₆₋₃₀ arylene-XA. In the cation-anion complex, cation X can be a substituted or unsubstituted tris(C₁₋₂₄ hydrocarbyl)ammonium, a substituted or unsubstituted tris(C₁₋₂₄ hydrocarbyl)phosphonium, a substituted or unsubstituted bis(C₁₋₂₄ hydrocarbyl)sulfonium, a substituted or unsubstituted imidazolium, a substituted or unsubstituted guanidinium, or a substituted or unsubstituted pyridinium. The anion A can be Cl⁻, Br⁻, I⁻, a substituted or unsubstituted (C₁₋₂₄ hydrocarbyl)carboxylate, HCO₃⁻, CO₃²⁻, CH₃SO₄⁻, HSO₄⁻, SO₄²⁻, H₂PO₄⁻, HPO₄²⁻, PO₄³⁻, NO₃⁻, p-toluenesulfonate, bis(trifluoromethanesulfonyl)imide, or a combination thereof.

For example, each R is the same or different C₆₋₂₀ arylene group or a halogenated derivative thereof, a straight or branched chain C₂₋₂₀ alkylene group or a halogenated derivative thereof, a C₃₋₈ cycloalkylene group or halogenated derivative thereof, in particular a divalent group of any of formulas (3) 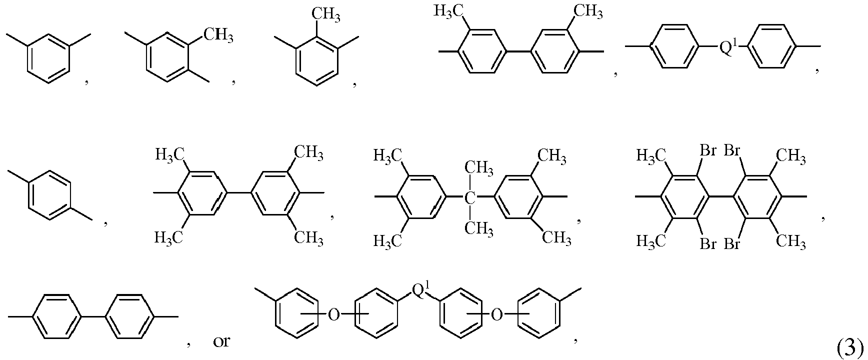 wherein Q¹ is -O-, -S-, -C(O)-, -SO₂-, -SO-, -P(R^{a})(=O)- wherein R^{a} is a C₁₋₈ alkyl or C₆₋₁₂ aryl, - C_{y}H_{2y}- wherein y is an integer from 1 to 5 or a halogenated derivative thereof (which includes perfluoroalkylene groups), or -(C₆H₁₀)_{z}- wherein z is an integer from 1 to 4. In particular aspects, R is m-phenylene, p-phenylene, or a diarylene sulfone.

Each M is independently the same or different, and is a substituted or unsubstituted divalent C₁₋₆₀ hydrocarbon group, -O-, -C(O)-, -OC(O)-, -OC(O)O-, -NHC(O)-, -(O)CNH-, -S-, -S(O)-, or -S(O)₂-. In an embodiment, q is 1, Q is a C₆₋₂₀ arylene, m is 1, and M is -O-.

Each D is phenylene. For example, each D is the same or different, and is m-phenylene, p-phenylene, bis(4,4'-phenylene)sulfone, bis(3,4'-phenylene)sulfone, or bis(3,3'-phenylene)sulfone. More specifically, D is m-phenylene or p-phenylene.

Each V is independently the same or different, and is a tetravalent C₄₋₄₀ hydrocarbon group. In an embodiment, V is a C₆₋₂₀ aromatic hydrocarbon group. Exemplary aromatic hydrocarbon groups include any of those of formulas (2) 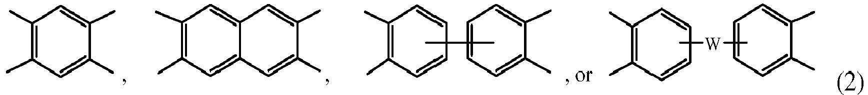 wherein W is -O-, -S-, -C(O)-, -SO₂-, -SO-, -P(R^{a})(=O)- wherein R^{a} is a C₁₋₈ alkyl or C₆₋₁₂ aryl, - C_{y}H_{2y}- wherein y is an integer from 1 to 5 or a halogenated derivative thereof (which includes perfluoroalkylene groups), or a group of the formula -O-Z-O- as described in formula (1a) below.

The cations described herein are groups such as ammonium, phosphonium, sulfonium, imidazolium, guanidinium, or pyridinium that form salts, or cation-anion complexes, with one or more anions. The ammonium, phosphonium, and sulfonium groups have the formulas -N(R¹)(R²)(R³)-, -P(R¹)(R²)(R³)-, or -S(R¹)(R²)- respectively, where R¹, R², and R³ are each independently a substituted or unsubstituted C₁₋₂₄ hydrocarbyl. Although written as neutral divalent groups for convenience, it is to be understood that one end is connected to an anion (e.g., G or A) and the other end is connected to either a C₁₋₂₀ alkylene or C₆₋₃₀ arylene (for cation X), or either M or D (for cation Q). When the cation group is imidazolium, guanidinium, or pyridinium, it is to be understood that these groups are directly connected at any position of the respective heterocyclic ring. The imidazolium, guanidinium, or pyridinium can optionally be substituted with one or more C₁₋₂₄ hydrocarbyls.

The C₁₋₂₄ hydrocarbyl groups of the cations can be any combination of alkyl groups or aryl groups that are each independently substituted or unsubstituted. Specific alkyl groups can each have from 1 to 12 carbon atoms, and specific aryl groups can have from 6 to 24 carbon atoms. For example, the cation can be a substituted or unsubstituted tris(C₁₋₁₂ alkyl)ammonium, a substituted or unsubstituted tris(C₆₋₂₄ aryl)ammonium, a substituted or unsubstituted tris(C₁₋₁₂ alkyl)phosphonium, a substituted or unsubstituted tris(C₆₋₂₄ aryl)phosphonium, tris(C₁₋₁₂ alkyl)sulfonium, or a substituted or unsubstituted tris(C₆₋₂₄ aryl)sulfonium.

Anions include both monovalent and polyvalent anions. The polyvalent anions further include complex anions such as [M^{t}(CN)ₓ]ⁿ⁻, [M^{t}(SCN)ₓ]ⁿ⁻ and/or [M^{t}Fₓ]ⁿ⁻, wherein M^{t} is Fe, W, or Mo, and [MO₂(Cl)₈]⁴⁻, as well as homo- and heteropolyoxometalates (for example Keggin-[X^{a}M^{t}₁₂O₄₀]ⁿ⁻ or Dawson-anions [X^{a}₂M^{t}₁₈O₆₂]ⁿ⁻, wherein M^{t} is Mo or W, and X^{a} is S, P, or Si). The polyvalent anion can also be a multiply charged phosphonate, such as 1-hydroxyethane-1,1-diphosphonate (HEDP), amino-tris(methylenephosphonate) (ATMP), ethylenediamine-tetra (methylenephosphonate) (EDTMP), diethylenetriamine-penta (methylenephosphonate) (DTPMP), hexamethylenediamine-tetra(methylenephosphonate) (HDTMP), hydroxyethyl-amino-di(methylenephosphonate) (HEMPA), or the like.

In another aspect, the polyimide oligomer of formula (1) can be a polyetherimide of formula (1a) 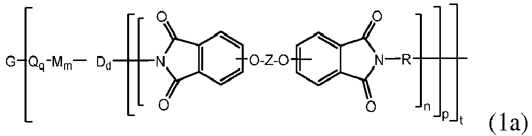 wherein G, Q, M, D, R, q, m, d, n, p, and t are as defined in formula (1), and wherein the divalent bonds of the -O-Z-O- group are in the 3,3', 3,4', 4,3', or the 4,4' positions. The group Z in -O-Z-O- of formula (1a) is a divalent organic group, and can be an aromatic C₆₋₂₄ monocyclic or polycyclic moiety optionally substituted with 1 to 6 C₁₋₈ alkyl groups, 1 to 8 halogen atoms, or a combination thereof, provided that the valence of Z is not exceeded. Exemplary groups Z include groups derived from a dihydroxy compound of formula (5) 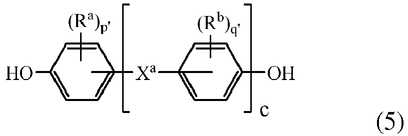 wherein R^{a} and R^{b} can be the same or different and are a halogen atom or a monovalent C₁₋₆ alkyl group, for example; p' and q' are each independently integers of 0 to 4; c is 0 to 4; and X^{a} is a bridging group connecting the hydroxy-substituted aromatic groups, where the bridging group and the hydroxy substituent of each C₆ arylene group are disposed ortho, meta, or para (preferably para) to each other on the C₆ arylene group. The bridging group X^{a} can be a single bond, -O-, -S-, -S(O)-, -S(O)₂-, -C(O)-, or a C₁₋₁₈ organic bridging group. The C₁₋₁₈ organic bridging group can be cyclic or acyclic, aromatic or non-aromatic, and can further comprise heteroatoms such as halogens, oxygen, nitrogen, sulfur, silicon, or phosphorous. The C₁₋₁₈ organic group can be disposed such that the C₆ arylene groups connected thereto are each connected to a common alkylidene carbon or to different carbons of the C₁₋₁₈ organic bridging group. A specific example of a group Z is a divalent group of formula (5a) 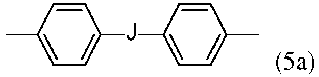 wherein J is -O-, -S-, -C(O)-, -SO₂-, -SO-, or -C_{y}H_{2y}- wherein y is an integer from 1 to 5 or a halogenated derivative thereof (including a perfluoroalkylene group). In a specific embodiment Z is a derived from bisphenol A, such that J in formula (5a) is 2,2-isopropylidene.

The polyimide can be a copolymer, for example a polyetherimide sulfone copolymer comprising structural units of formulas (1) or (1a) wherein at least 50 mol% of the R groups are of formula (3) wherein Q¹ is -SO₂- and the remaining R groups are independently p-phenylene, m-phenylene, C₁₋₂₀ alkylene-XA, C₆₋₃₀ arylene-XA, or a combination thereof, provided that at least one R is C₁₋₂₀ alkylene-XA or C₆₋₃₀ arylene-XA; and Z is 2,2'-(4-phenylene)isopropylidene. Alternatively, the polyetherimide copolymer optionally comprises additional structural imide units, for example imide units wherein V is of the formulas 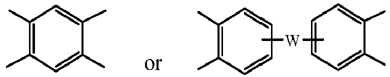 wherein W is a single bond, -O-, -S-, -C(O)-, -SO₂-, -SO-, -P(R^{a})(=O)- wherein R^{a} is a C₁₋₈ alkyl or C₆₋₁₂ aryl, or -C_{y}H_{2y}- wherein y is an integer from 1 to 5 or a halogenated derivative thereof (which includes perfluoroalkylene groups). These additional structural imide units can comprise less than 20 mol% of the total number of units, or 0 to 10 mol% of the total number of units, or 0 to 5 mol% of the total number of units, or 0 to 2 mol% of the total number of units. In some aspects, no additional imide units are present in the polyimides other than polyetherimide units.

The polyimide oligomers (which as indicated above include polyimide oligomer (1) and the polyetherimide oligomer (1a), can be prepared by methods known in the art, including a polycondensation or ether-forming polymerization. For example, the polyimide oligomer can be prepared by polycondensation, which includes an imidization of a dianhydride of formula (6) or formula (6a) 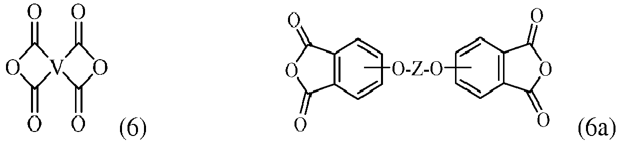 or a chemical equivalent thereof, with a diamine of formula (7) H₂N-R¹-NH₂ (7) and optionally a polyamine of formula (8) 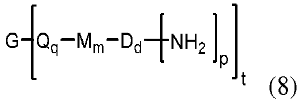 in a solvent and under conditions effective to provide an anhydride-capped oligomer; and reacting the anhydride-capped oligomer with an amino compound of formula (9)

H₂N-R² (9)

under conditions effective to provide the polyimide oligomer, wherein R¹ is a C₁₋₂₀ divalent bridging group, R² is a C₁₋₂₀ alkylene-XA or a C₆₋₃₀ arylene-XA wherein XA is a cation-anion complex, and G, Q, M, D, V, q, m, d, p, and t are as defined in formula (1). For example, the optional polyamine (8) can be present in the reaction in an amount of 0.1 to 20 mol%, or 0.5 to 10 mol%, but preferably 1 to 5 mol%, or 1.5 to 4 mol% to achieve increased branching and increased PDI.

Exemplary dianhydrides of formulas (6) and (6a) include 3,3-bis[4-(3,4-dicarboxyphenoxy)phenyl]propane dianhydride; 4,4'-bis(3,4-dicarboxyphenoxy)diphenyl ether dianhydride; 4,4'-bis(3,4-dicarboxyphenoxy)diphenyl sulfide dianhydride; 4,4'-bis(3,4-dicarboxyphenoxy)benzophenone dianhydride; 4,4'-bis(3,4-dicarboxyphenoxy)diphenyl sulfone dianhydride; 2,2-bis[4-(2,3-dicarboxyphenoxy)phenyl]propane dianhydride; 4,4'-bis(2,3-dicarboxyphenoxy)diphenyl ether dianhydride; 4,4'-bis(2,3-dicarboxyphenoxy)diphenyl sulfide dianhydride; 4,4'-bis(2,3-dicarboxyphenoxy)benzophenone dianhydride; 4,4'-bis(2,3-dicarboxyphenoxy)diphenyl sulfone dianhydride; 4-(2,3-dicarboxyphenoxy)-4'-(3,4-dicarboxyphenoxy)diphenyl-2,2-propane dianhydride; 4-(2,3-dicarboxyphenoxy)-4'-(3,4-dicarboxyphenoxy)diphenyl ether dianhydride; 4-(2,3-dicarboxyphenoxy)-4'-(3,4-dicarboxyphenoxy)diphenyl sulfide dianhydride; 4-(2,3-dicarboxyphenoxy)-4'-(3,4-dicarboxyphenoxy)benzophenone dianhydride; and, 4-(2,3-dicarboxyphenoxy)-4'-(3,4-dicarboxyphenoxy)diphenyl sulfone dianhydride, or a combination thereof.

Specific examples of diamines of formula (7) include hexamethylenediamine, polymethylated 1,6-n-hexanediamine, heptamethylenediamine, octamethylenediamine, nonamethylenediamine, decamethylenediamine, 1,12-dodecanediamine, 1,18-octadecanediamine, 3-methylheptamethylenediamine, 4,4-dimethylheptamethylenediamine, 4-methylnonamethylenediamine, 5-methylnonamethylenediamine, 2,5-dimethylhexamethylenediamine, 2,5-dimethylheptamethylenediamine, 2, 2-dimethylpropylenediamine, N-methyl-bis (3-aminopropyl) amine, 3-methoxyhexamethylenediamine, 1,2-bis(3-aminopropoxy) ethane, bis(3-aminopropyl) sulfide, 1,4-cyclohexanediamine, bis-(4-aminocyclohexyl) methane, m-phenylenediamine, p-phenylenediamine, 2,4-diaminotoluene, 2,6-diaminotoluene, m-xylylenediamine, p-xylylenediamine, 2-methyl-4,6-diethyl-1,3-phenylene-diamine, 5-methyl-4,6-diethyl-1,3-phenylene-diamine, benzidine, 3,3'-dimethylbenzidine, 3,3'-dimethoxybenzidine, 1,5-diaminonaphthalene, bis(4-aminophenyl) methane, bis(2-chloro-4-amino-3,5-diethylphenyl) methane, bis(4-aminophenyl) propane, 2,4-bis(p-amino-t-butyl) toluene, bis(p-amino-t-butylphenyl) ether, bis(p-methyl-o-aminophenyl) benzene, bis(p-methyl-o-aminopentyl) benzene, 1, 3-diamino-4-isopropylbenzene, bis(4-aminophenyl) sulfide, bis-(4-aminophenyl) sulfone (also known as 4,4'-diaminodiphenyl sulfone (DDS)), and bis(4-aminophenyl) ether. Any regioisomer of the foregoing compounds can be used. Combinations of these compounds can also be used. In some embodiments the organic diamine is m-phenylenediamine, p-phenylenediamine, 4,4'-diaminodiphenyl sulfone, or a combination thereof.

Exemplary polyamines (8) can include any of formulas (8a)-(8t) 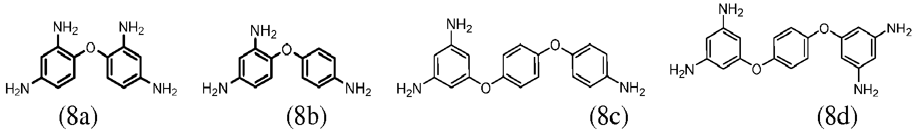 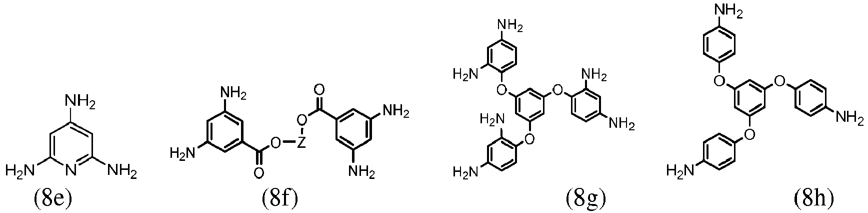 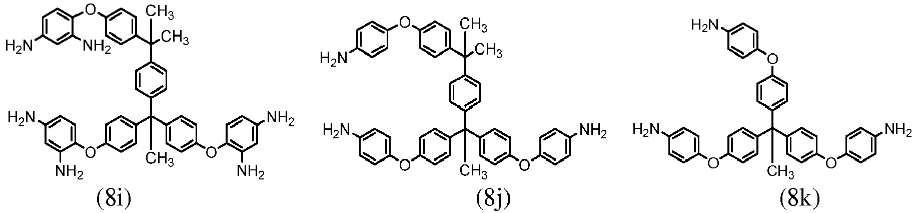 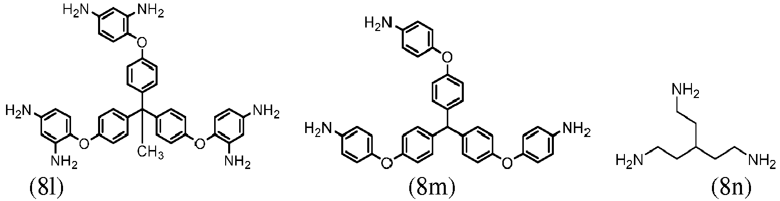 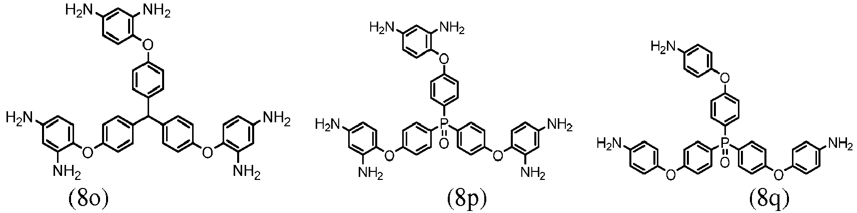 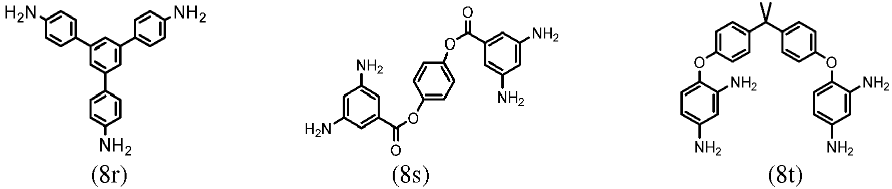 wherein Z is a divalent C₁₋₆₀ hydrocarbon group, or a C₆₋₄₀ aromatic hydrocarbon group, a C₂₋₂₀ aliphatic group, or a C₄₋₈ cycloaliphatic group.

A catalyst can be present during imidization. Exemplary catalysts include sodium aryl phosphinates, guanidinium salts, pyridinium salts, imidazolium salts, tetra(C₇₋₂₄ arylalkylene) ammonium salts, dialkyl heterocycloaliphatic ammonium salts, bis-alkyl quaternary ammonium salts, (C₇₋₂₄ arylalkylene)(C₁₋₁₆ alkyl) phosphonium salts, (C₆₋₂₄ aryl)(C₁₋₁₆ alkyl) phosphonium salts, phosphazenium salts, and combinations thereof. The anionic component of the salt is not particularly limited, and can be, for example, chloride, bromide, iodide, sulfate, phosphate, acetate, maculate, tosylate, and the like. A combination of different anions can be used. A catalytically active amount of the catalyst can be determined by one of skill in the art without undue experimentation, and can be, for example, more than 0 to 5 mol% percent, or 0.01 to 2 mol%, or 0.1 to 1.5 mol%, or 0.2 to 1.0 mol% based on the moles of optional polyamine (8) and diamine (7).

Polymerization can be carried out in a solvent, for example relatively non-polar solvents with a boiling point above 100°C, or above 150°C, for example o-dichlorobenzene, dichlorotoluene, 1,2,4-trichlorobenzene, dimethylacetamide, dimethyl sulfoxide, diphenyl sulfone, sulfolane, or a monoalkoxybenzene such as anisole, veratrole, diphenylether, N-methylpyrrolidone, benzonitrile, or phenetole. The polymerization temperature can be at least 110°C, or 150 to 275°C, or 175 to 225°C for 0.5 hours (h) to 3 days, for example, for 0.5 to 72 h, or 1 to 30 h or 1 to 20 h. Atmospheric or super-atmospheric pressures can be used, for example up to 5 atmospheres.

The amino compound (9) can be added to the reaction mixture, for example, 1 minute to 5 h, or 1 to 24 h, or 1 to 20 h, or 1 to 18 h, after the polymerization reaction begins. After addition of the amino compound (9), the reaction mixture can be subjected to continued heating, for example at 150 to 275°C, or 175 to 225°C, for an additional 1 to 10 h, or 1 to 5. After the step of continued heating, the reaction mixture can be subsequently heated at 200 to 450°C, or 300 to 400°C, for a period of 10 minutes (min) to 2 h, or 20 to 90 min, or 30 to 60 min.

A molar ratio of dianhydride (6) or (6a) to a combination of the optional polyamine (8) and diamine (7) can be 0.9:1 to 1.1:1, or 1:1. The amino compound (9) can be added in an amount of 0 to 95 mol%, or 1 to 90 mol%, or 5 to 80 mol%, or 5 to 50 mol%, or 5 to 20 mol%, or 1 to 10 mol%, based on the total amount of dianhydride (6) or (6a),

An endcapping agent, in addition to the amino compound (9), can be present during imidization. An amine-containing endcapping agent is used, the amount can be more than 0 to 10 mol% based on the total amount of dianhydride (6) or (6a). If an anhydride-containing endcapping agent is used, the amount can be in the range of more than 0 to 20 mol%, or 1 to 10 mol% based on the amount of the optional polyamine (8) and diamine (7) combined.

The polyimide oligomer can be a polyetherimide oligomer that is synthesized by an ether-forming polymerization, which proceeds via an imidization, i.e., reaction of a diamine of formula (7) with an anhydride of formula (10) 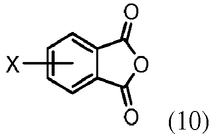 wherein X is a nitro group or halogen, and optionally the polyamine of formula (8) to provide intermediate bis(phthalimide)s of formulas (11a) and (11b) 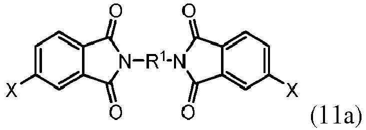 and optionally 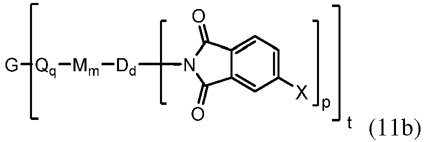 wherein G, Q, M, q, m, p, and t are as described in formula (1) and (1a) and X is as described in formula (10). The optional polyamine (8) can be present in the reaction in an amount of 0.1 to 20 mol%, or 0.5 to 10 mol%, or 1 to 5 mol%, or 1.5 to 4 mol% to achieve increased branching. An optional catalyst or optional monofunctional chain terminating agent as described above can be present during imidization.

The bis(phthalimide)s (11a) and (11b) are reacted with an alkali metal salt of a dihydroxy aromatic compound of formula (12)

AMO-Z-OAM (12)

wherein AM is an alkali metal and Z is as defined herein, to provide an anhydride-capped oligomer; and the anhydride-capped oligomer is reacted with the amino compound (9) under conditions effective to provide the polyetherimide oligomer. Polymerization conditions effective to provide the polyetherimides are generally known, and can be conducted in a solvent as described above. This polymerization can also be conducted in the melt, for example at 250 to 350°C, where a solvent is generally not present.

As described above, the optional polyamine (8) and organic diamine (7) can be reacted in combination, wherein the polyamine is present in an amount of 0.1 to 20 mol%, or 0.5 to 10 mol%, but preferably 1 to 5 mol%, or 1.5 to 4 mol% to achieve increased branching and increased PDI. Under these conditions, it is possible that both branched and unbranched polyimides are formed, to provide a polyimide composition comprising a branched polyimide and a second polyimide that is not the same as the branched polyimide. This second polyimide is generally an unbranched polyimide that comprises more than 1, for example 5 to 1000, or 5 to 500, or 10 to 100, structural units of formula (14) 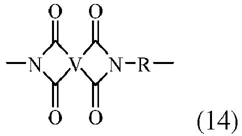 wherein V and R are as described in formulas (1). It is also possible to combine the branched polyimide or polyimide composition with a second polyimide that is separately manufactured, and contains a different degree of branching or no branching, to obtain the polyimide composition.

The polyimide oligomer can have one or more of the following properties: a T_{g} greater than 160°C, preferably 160 to 395°C, more preferably 180 to 280°C, even more preferably 200 to 250°C, as determined by differential scanning calorimetry (DSC); a viscosity of greater than 25,000 Pascal·seconds at a frequency of 0.1 radians per second; a polydispersity (PDI) of 1.5 to 3, preferably 1.8 to 3, more preferably 2 to 3, as determined by size exclusion chromatography multi-angle light scattering (SEC-MALS); a melt index of 0.1 to 10 grams per minute (g/min), as measured by ASTM D1238 at 340 to 370°C, using a 6.7 kilogram (kg) weight; a weight average molecular weight (M_{w}) of 1,000 to 150,000 g/mol, or 10,000 to 80,000 g/mol, or 20,000 to 60,000 g/mol, as measured by gel permeation chromatography (GPC), using polystyrene standards or light scattering; an intrinsic viscosity greater than 0.2 deciliters per gram (dL/g), or, more preferably, 0.35 to 0.7 dL/g, as measured in m-cresol at 25°C.

The polyimide oligomer can have one or more of the following properties: a thermal decomposition temperature of greater than 450°C, preferably 480 to 600°C, more preferably 500 to 600°C, as determined at a 5% weight loss by thermogravimetric analysis (TGA); a tensile strength of greater than 70 megapascals (MPa), or 70 to 160 MPa, preferably 80 to 140 MPa, more preferably 90 to 130 MPa, as determined by ASTM D638; an elongation at break of greater than 3%, or 3 to 6%, preferably 4 to 6%, more preferably 4.5 to 6%, as determined by ASTM D638; an elastic modulus of 2 to 5 gigapascal (GPa), preferably 2.3 to 3.8 GPa, more preferably 2.6 to 3.6 GPa, as determined by ASTM D882; a UL94 rating of V-1 or better, as measured following the procedure of Underwriter's Laboratory Bulletin 94 entitled "Tests for Flammability of Plastic Materials for Parts in Devices and Appliances" (ISBN 0-7629-0082-2), Fifth Edition, Dated Oct. 29, 1996, incorporating revisions through and including Dec. 12, 2003, for example a UL94 rating of V-0 or V-1 at a thickness of 0.3, 0.5, 0.75, 0.9, 1, 1.5, 1.6, 2, or 3 mm; a char yield of greater that 50%, preferably greater than 55%, more preferably greater than 58%, as determined by TGA in nitrogen at 980°C.

Also provided is a polymer composition including the polyimide (or polyetherimide) oligomer and a second polymer that is not the same as the polyimide (or the polyetherimide). Such polymer compositions can include 1 to 99 wt% of the polyimide or polyetherimide and 1 to 99 wt% of the second polymer, or 10 to 90% of the polyimide or polyetherimide and 10 to 90 wt% of the second polymer.

Exemplary second polymers include, but are not limited to, a polyacetal, poly(C₁₋₆ alkyl)acrylate, polyacrylamide, polyacrylonitrile, polyamide, polyamideimide, polyanhydride, polyarylene ether, polyarylene ether ketone, polyarylene ketone, polyarylene sulfide, polyarylene sulfone, polybenzothiazole, polybenzoxazole, polybenzimidazole, polycarbonate, polyester, poly(C₁₋₆ alkyl)methacrylate, polymethacrylamide, cyclic olefin polymer, polyolefin, polyoxadiazole, polyoxymethylene, polyphthalide, polysilazane, polysiloxane, polystyrene, polysulfide, polysulfonamide, polysulfonate, polythioester, polytriazine, polyurea, polyurethane, vinyl polymer, or a combination thereof.

The compositions can include various additives ordinarily incorporated into compositions of these types, with the proviso that any additive is selected so as to not significantly adversely affect the desired properties of the composition. Exemplary additives include antioxidants, thermal stabilizers, light stabilizers, ultraviolet light (UV) absorbing additives, quenchers, plasticizers, lubricants, mold release agents, antistatic agents, visual effect additives such as dyes, pigments, and light effect additives, flame resistances, anti-drip agents, and radiation stabilizers. Particulate fillers and reinforcing fillers can also be present, and include mineral fillers, flaked fillers, carbon nanotubes, exfoliated nanoclays, carbon nanowires, carbon nanospheres, carbon-metal nanospheres, carbon nanorods, carbon-metal nanorods, nanoparticles, insoluble polymers, glass fibers, carbon fibers, glass-carbon fibers, talc including fibrous, modular, needle shaped, and lamellar talc, graphite, fibrillated fluoropolymers, polymer fibers and filaments, woven fibers, metal particles, inorganic fibers, single crystal fibers or "whiskers", or the like. Combinations of additives can be used. The foregoing additives can be present individually in an amount from 0.005 to 10 wt%, or combined in an amount from 0.005 to 20 wt%, preferably 0.01 to 10 wt%, based on the total weight of the composition.

Also provided is an article that includes the polyimide, polyimide composition, or polymer composition. A wide variety of articles can be manufactured, for example articles of utility in automotive, telecommunication, aerospace, electrical/electronics, battery manufacturing, wire coatings, transportation, food industry, and healthcare applications. Such articles can include films, fibers, foams, thin sheets, small parts, coatings, fibers, preforms, matrices for polymer composites, or the like. For example, the article is an open or closed cell foam, a nano-foam, a battery separator, an ion exchange membrane, tubing, a capillary, a coating, or a scratch resistant part. The articles can be extruded or molded, for example injection molding, melt extrusion, thermoforming, or roto-molding. The articles also can be made by an additive manufacturing method, for example three dimensional printing. Components for electronic devices and components for sterilizable medical articles are especially useful. Thin-wall components manufactured by injection molding are useful, such as a wall having a thickness from 0.1 to 10 mm, or 0.2 to 5 mm, or 0.5 to 2 mm. Films can be manufactured by solution-casting or melt processing the polyimide, the polyimide compositions, the polyetherimide compositions, or the polymer compositions described herein.

The disclosure is further illustrated by the following non-limiting examples.

### EXAMPLES

The components in Table 1 were used in the Examples.

**Table 1**

| **Component** | **Description** |
|---|---|
| mPD | m-Phenylenediamine (Sigma-Aldrich) |
| oDCB | o-dichlorobenzene (Sigma-Aldrich) |
| PPh₃ | Triphenylphosphine (Sigma-Aldrich) |
| 4-Bromoaniline | 4-Bromoaniline (Sigma-Aldrich) |
| Pd(OAc)₂ | Palladium (II) acetate (Sigma-Aldrich) |
| BPADA | 2,2-Bis[4-(3,4dicarboxyphenoxy) phenyl] propane dianhydride (SABIC) |
| PEI-16k | Linear polyetherimide, Mₙ = 16.9 kg/mol as determined by GPC using polystyrene standards (SABIC) |
| PEI-24k | Linear polyetherimide, Mₙ = 24.5 kg/mol as determined by GPC using polystyrene standards (SABIC) |

Physical testing of the compositions was conducted according to the following test methods and procedures. Unless indicated otherwise, all test standards set forth herein are the test standards in effect as of 2016.

Nuclear magnetic resonance spectroscopy characterization was performed on a Varian Unity 400 at 399.98 MHz (¹H NMR) or 162 MHz (³¹P NMR) using CDCl₃ or DMSO-d₆.

Thermogravimetric analysis (TGA) was performed on a Discovery TGA 5500 (TA Instruments). The samples were heated to 1000°C at a heating rate of 20°C/min in a stream of nitrogen (25 mL/min).

Differential scanning calorimetry (DSC) was performed on a Discovery DSC2500 (TA Instruments), which was calibrated using indium (melting point, m.p. = 156.60°C) and zinc (m.p. = 419.47°C) standards. The samples were heated at a rate of 10°C/min in a stream of nitrogen (25 mL/min). Glass transition temperature (T_{g}) was determined at the midpoint of the transition in the second heating ramp. The polymers were hot-pressed between two Kapton sheets at 315°C using two 0.254-mm-thick shims to control the film thickness. A mold releasing agent (provided by REXCO) was applied on the Kapton sheets to prevent the polymers from sticking. The polymer films were stepwise hot-pressed at a force of 1, 5, 7, 10, and 10 tons for one minute and released after each pressing (five pressing-releasing cycles in total).

Weight average molecular weight (M_{w}), number average molecular weight (Mₙ), and polydispersity (PDI) were measured by size exclusion chromatography (SEC, EcoSECHLC-8320, Tosoh Bioscience) equipped with a Wyatt MiniDAWN TREOS multi-angle light scattering detector and a differential refractive index detector (DRI). The PEIs were dissolved in DMF, and the flow rate was 0.5 mL min⁻¹. The column set consisting of a SuperH-H guard column (4.6 mm ID × 3.5 cm, 4 µm), a SuperH-H guard column (6.0 mm ID × 15 cm, 4 µm), and two SuperH-H guard columns (6.0 mm ID × 15 cm, 4 µm) carried out the separation. Both the detectors and columns were maintained at 50°C. Polystyrene standards were used as reference.

Samples for tensile testing of the PEI oligomers were prepared by melt-pressing the sample between two Kapton sheets at 300°C using two 0.1-inch-thick shims to control the film thickness. A mold release agent (REXCO) was applied on the Kapton sheets to prevent the polymers from sticking. The polymer films were stepwise hot-pressed at a force of 1, 5, 7, 10, and 10 tons for one minute and released after each pressing (five press-release cycles in total).

Tensile tests were performed on an Instron 5500R at a cross-head speed of 5 mm/min. The tensile strength, maximum elongation, and Young's modulus were averaged over five specimens.

Melt rheological studies were performed on an AR-G2 rheometer (TA Instruments) using two 25-mm-diameter parallel plates. Time sweep tests (1% oscillatory strain, 1 Hz, 340°C, 1 h, under air) were used to evaluate the changes in the storage moduli, loss moduli, and complex viscosities of the polymer melts at a constant temperature.

The flame retardancy was characterized by the UL-94 vertical burning test following ASTM D3801 standard. In each test, a flame was applied to the sample for 10 seconds (s) and then removed. The self-extinguishing time was recorded as t₁ (s). The flame was then reapplied for another 10 seconds and the self-extinguishing time was recorded as t₂ (s). Limiting oxygen index (LOI) tests was performed according to ASTM D2863.

### Example 1

Scheme 1 illustrates the general procedure and reaction conditions for synthesizing the PEI-DA oligomer from BPADA and mPD with a stoichiometric imbalance. The first reaction step is the synthesis of a dianhydride-terminated poly(ether imide) telechelic oligomer (PEI-DA). Subsequent reaction with aniline or (Ph₃P(C₆H₄-4-NH₂))Br provides the comparative phenyl-terminated poly(ether imide) telechelic oligomer (PEI-Ph, when X = H) or the phosphonium bromide terminated PEI (PEI-PhPPh₃Br) oligomer, respectively.

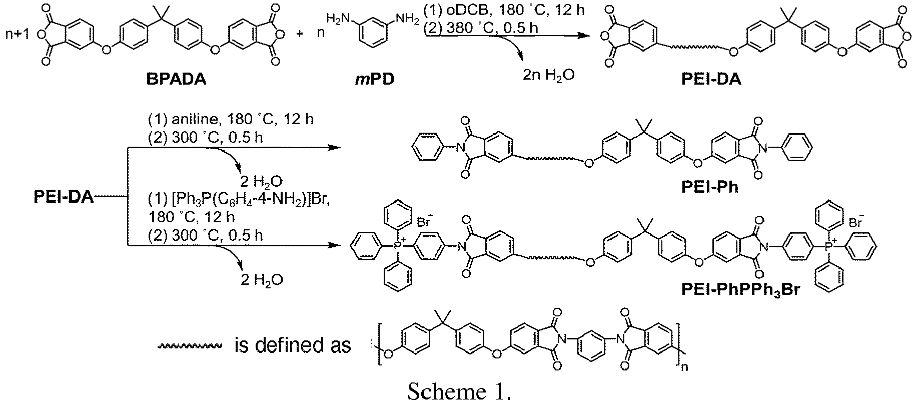

A typical synthesis procedure for PEI-DA with a target number average molecular weight (Mₙ) of 8 kDa (8k-PEI-DA) is described as follows. A 500-mL three-neck round-bottom flask was equipped with an overhead stirring-rod, a Dean-Stark trap, and a nitrogen inlet. The flask was charged with BPADA (17.389 g, 33.409 mmol), mPD (3.335 g, 30.84 mmol), and oDCB (80 mL) and then purged with N₂. Subsequently, the slurry was heated at 180 °C for 12 h under constant stirring and then at 380°C for 0.5 hours (h) without stirring. The entire reaction was conducted in a constant stream of nitrogen.

A similar procedure, using the appropriate reaction conditions, was used to prepare PEI-DA with target Mₙ of 10 kDa (10k-PEI-DA) and 12 kDa (12k-PEI-DA).

### Example 2

The PEI-Ph oligomers were prepared by reacting the PEI-DA oligomers with aniline in oDCB (Scheme 1). A typical synthesis of the 8k-PEI-Ph oligomer is described as follows. Aniline (0.48 mL, 0.490 g, 5.261 mmol) and oDCB (60 mL) were added to the flask that contained as-synthesized 8k-PEI-DA oligomer. Subsequently, the mixture was heated at 180°C for 6 h under stirring and then heated to 300 °C for 0.5 h without stirring in a metal bath. The entire reaction was conducted in a constant N₂ stream. The product was dissolved in CHCl₃ and precipitated into acetone. The precipitate was filtered, washed with acetone three times, and dried *in vacuo* at 180°C for at least 8 h.

A similar procedure, using the appropriate reaction conditions, was used to prepare PEI-Ph with target Mₙ of 10 kDa (10k-PEI-Ph) and 12 kDa (12k-PEI-Ph).

### Example 3

[Ph₃P(C₆H₄-4-NH₂)]Br (triphenyl-4-aminophenylphosphonium bromide) was synthesized as shown in Scheme 2. PPh₃ (2.649 g, 10.00 mmol), 4-bromoaniline (1.773 g, 10.00 mmol), and CH₃CN (10 mL) were charged to a 100-mL two-neck round-bottom flask with a stirring bar. Pd(acetate)₂ (0.023 g, 1.0 mmol) was added as the catalyst. The mixture was heated at reflux for 24 hours until a white precipitate started hindering the stirring. The precipitate was filtered and washed with acetone until the filter cake was completely white. The white powder was then collected and dried *in vacuo* at 100 °C to provide [Ph₃P(C₆H₄-4-NH₂)]Br in a 30% yield with a melting point of ∼340°C. ¹H NMR (400 MHz, CDCl₃, δ): 7.87-7.82 ppm (m, 3H, C₆H₅P-), 7.72-7.67 ppm (m, 6H, C₆H₅P-), 7.65-7.55 ppm (m, 6H, C₆H₅P-), 7.20-7.09 ppm (m, 4H, 4-NH₂C₆H₄P-). ³¹P NMR (162 MHz, CDCl₃, δ): 22.1.

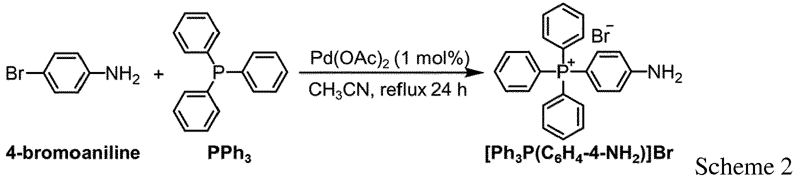

### Example 4

PEI-PhPPh₃Br was prepared by reacting PEI-DA with [Ph₃P(C₆H₄-4-NH₂)]Br (Scheme 1). For example, the synthesis of PEI-PhPPh₃Br with a targeted Mₙ of 8 kDa (8k-PEI-PhPPh₃Br) is described as follows. [Ph₃P(C₆H₄-4-NH₂)]Br (2.448 g, 5.637 mmol) was added to the three-neck round-bottom flask that contained the as-synthesized 8k-PEI-DA. The flask was equipped with a mechanical stirrer, an N₂ inlet, and a Dean-Stark trap. The mixture was heated at 180°C for 12 h under constant stirring. Afterwards the mixture was heated at 300°C for 0.5 h without stirring. The reaction was conducted with a constant N₂ flow. After the reaction, the product was dissolved in CHCl₃ and precipitated into methanol (MeOH). The precipitate was filtered, washed with MeOH, and dried *in vacuo* at 180°C.

### Thermal Properties

Table 2 summarizes the glass transition (T_{g}) temperatures and char yields for the 8k-, 10k-, and 12k-PEI oligomers as compared to PEI-16k and PEI-24k.

**Table 2**

| Sample (Mₙ) | T_{g} (°C) | Char Yield (%) |
|---|---|---|
| PEI-Ph (8k) | 205 | 49 ± 1 |
| PEI-Ph (10k) | 210 | 50 ± 1 |
| PEI-Ph (12k) | 214 | 50 ± 1 |
| PEI-PhPPh₃Br (8k) | 224 | 59 ± 1 |
| PEI-PhPPh₃Br (10k) | 223 | 60 ± 0 |
| PEI-PhPPh₃Br (12k) | 224 | 60 ± 1 |
| PEI-16k | 217 | 52 ± 0 |
| PEI-24k | 217 | 54 ± 0 |

The glass transition temperature (T_{g}) of PEI-PhPPh₃Br was at least 10°C higher than that of the neutral PEI-Ph with the same Mₙ, which is attributed to the strong ionic interactions among the charged end groups in PEI-PhPPh₃Br. The increase in T_{g} was more significant for PEIs with lower molecular weights. Without being bound by theory, this increase in T_{g} was due to the higher ionic concentration in the samples having lower molecular weights.

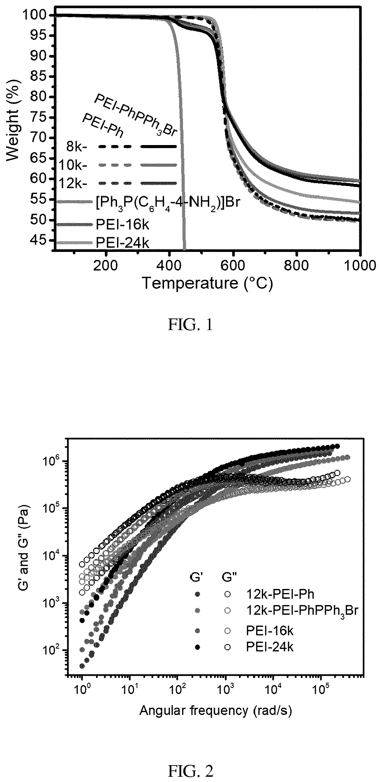

Thermogravimetric analysis (TGA) further revealed degradation behaviour of PEI-PhPPh₃Br. The degradation of PEI-PhPPh₃Br differed drastically from that of PEI-Ph, as shown in FIG. 1. PEI-Ph exhibited single step degradation of the backbone. In contrast, PEI-PhPPh₃Br showed two-step degradation. The first thermal degradation of PEI-PhPPh₃Br was at -400 °C, which coincided with that of the end capper [Ph₃P(C₆H₄-4-NH₂)]Br, indicating that the first degradation occurred at the phosphonium end groups of PEI-PhPPh₃Br. The observed thermal stability indicated that PEI-PhPPh₃Br has a large temperature window for melt processing.

### Tensile Properties

To examine the tensile properties of PEI-Ph and PEI-PhPPh₃Br oligomers, melt-pressed films were prepared from the respective PEI oligomer powders. The mechanical properties of melt-pressed 12k-PEI-Ph and 12k-PEI-PhPPh₃Br oligomers, in comparison with PEI-16k and PEI-24k, are provided in Table 3.

**Table 3**

| Sample | Tensile strength (MPa) | Tensile Strain (%) | Young's modulus (GPa) |
|---|---|---|---|
| 12k-PEI-Ph | 104 ± 3 | 5 | 2.57 ± 0.07 |
| 12k-PEI-PhPPh₃Br | 109 ± 4 | 7 | 2.75 ± 0.12 |
| PEI-16k | 109 ± 2 | 18 | 2.82 ± 0.08 |
| PEI-24k | 107 ± 1 | 18 | 2.79 ± 0.08 |

The tensile properties of melt-pressed PEI-Ph and PEI-PhPPh₃Br oligomer films were compared with PEI-16k and PEI-24k. Among the PEI oligomers, 8k-PEI-PhPPh₃Br formed a film, whereas 8k-PEI-Ph could not, indicating that the phosphonium end groups provided for better film formability. To characterize the tensile properties, the films were cut into dumbbell-shaped specimens. Only 12k-PEI-Ph and 12k-PEI-PhPPh₃Br generated intact specimens. The tensile strength and Young's modulus of 12k-PEI-PhPPh₃Br were comparable to those of PEI-16k and PEI-24k. Therefore, the phosphonium end groups impart excellent film formability to PEI oligomers with a Mₙ as low as 8 kDa and impart outstanding tensile strength to PEI oligomers with a Mₙ as low as 12 kDa.

### Rheological Properties

FIG. 2 shows time sweeps (1% oscillatory strain, 1 Hz, 340°C, 1 h, air) time sweeps used to compare the melt stabilities of the PEI oligomers at 340°C. The relaxation of the polymer chains, indicated by the crossover of storage modulus (G') and loss modulus (G") shown in FIG. 2, occurred at lower frequencies for 12k-PEI-PhPPh₃Br than for 12k-PEI-Ph. Relaxation of 12k-PEI-PhPPh₃Br occurred at frequencies similar to those of PEI-16k and PEI-24k. After relaxation, G' and G" of the oligomers exhibited similar slopes of 1.60 and 0.96.

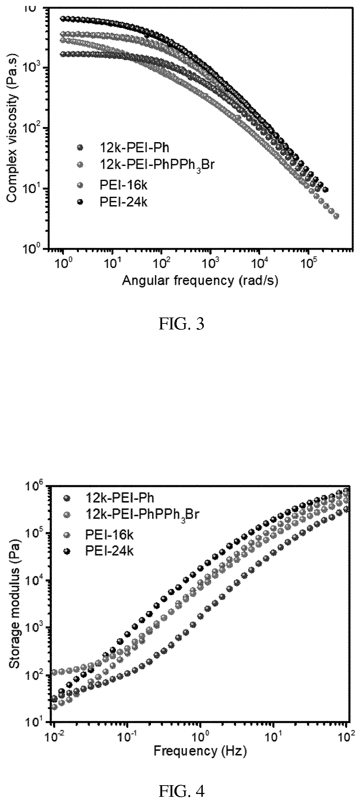

FIG. 3 shows time-temperature superposition (TTS) master curves of viscosities at 340°C, which represents a low-end melt processing temperature used for PEIs. Following the Cox-Merz rule, steady shear viscosity at a given shear rate is empirically equal to the dynamic viscosity at the same vibration frequency. 12k-PEI-PhPPh₃Br exhibited the fastest decrease in complex viscosity and the strongest shear thinning behaviour, and complex viscosity was the lowest at typical processing shear rates (>1000 rad/s), suggesting the best processibility among the oligomers. At low angular frequencies, viscosity of 12k-PEI-PhPPh₃Br is higher than 12k-PEI-Ph and comparable to PEI-16k and PEI-24k. The flow characteristics of 12k-PEI-PhPPh₃Br are advantageous for injection molding, as thinner parts can be filled, and molding can be performed at lower temperatures and pressures.

### Flame Retardancy

Table 4 shows the flame retardancy results obtained for 12k-PEI-Ph, 12k-PEI-PhPPh₃Br, PEI-16k, and PEI-24k. The UL-94 rating was at a thickness of 1.6 mm. The char yield results are provided in Table 2.

**Table 4**

| Sample | t₁ (s) | t₂ (s) | LOI (%) | UL-94 rating | Dripping (Y or N) |
|---|---|---|---|---|---|
| 12k-PEI-Ph | 1 | 1 | 44.5 ± 0.5 | V-0 | N |
| 12k-PEI-PhPPh₃Br | 1 | 1 | 51.0 ± 0.5 | V-0 | N |
| PEI-16k | 2 | 2 | 42.0 ± 0.5 | V-0 | Y |
| PEI-24k | 1 | 1 | 45.0 ± 0.5 | V-0 | Y |

Sample bars of the oligomers had UL-94 V-0 ratings. In the UL-94 tests, PEI-16k and PEI-24k bars showed some dripping, although the drips did not ignite the cotton underneath. In contrast, the PEI-Ph bar deformed slightly and there was no dripping. More surprisingly, the PEI-PhPPh₃Br bar did not deform and the shape remained unchanged throughout the burning test.

Rheological frequency sweep tests were conducted at 320°C. FIG. 4 shows the storage moduli (G') of the PEI oligomers plotted against the angular frequency. PEI-16k and PEI-24k displayed storage modulus response common for entangled polymer melts, with G' decreasing as the frequency was reduced. PEI-Ph and PEI-PhPPh₃Br had slower rates of G' decrease at lower frequencies than at higher frequencies. The absolute G' value of PEI-PhPPh₃Br was almost one magnitude higher than that of PEI-Ph and similar to PEI-16k.

The char yields of the PEI oligomers were extracted from the TGA curves at 980 °C and summarized in Table 2. PEI-16k and PEI-24k showed char yields of 52% and 54%, respectively. PEI-PhPPh₃Br showed char yields of about 60%, which were 10% higher than the PEI-Ph oligomers. The limiting oxygen index (LOI) of PEI-PhPPh₃Br reached 51%, while those of PEI-16k, PEI-24k, and PEI-Ph were less than 45%, showing the significant enhancement of flame retardance properties for PEI-PhPPh₃Br.

This disclosure is further illustrated by the following non-limiting aspects.

Aspect 1. A polyimide oligomer of formula (1), wherein G is a group having a valence of t and is connected by a covalent bond or an ionic bond, each Q is independently the same or different, and is a cation or a substituted or unsubstituted divalent C₁₋₆₀ hydrocarbon group, each M is independently the same or different, and is a substituted or unsubstituted divalent C₁₋₆₀ hydrocarbon group, -O-, -C(O)-, -OC(O)-, -OC(O)O-, -NHC(O)-, -(O)CNH-, -S-, -S(O)-, or -S(O)₂-, D is a phenylene, each V is independently the same or different, and is a tetravalent C₄₋₄₀ hydrocarbon group, each R is independently the same or different, and is a C₁₋₂₀ divalent bridging group, a C₁₋₂₀ alkylene-X, or a C₆₋₃₀ arylene-XA wherein XA is a cation-anion complex, provided that at least one R is C₁₋₂₀ alkylene-XA or C₆₋₃₀ arylene-XA, q is 0 or 1, m is 0 or 1, d is 0 or 1, p is 1 or 2, t is 1 to 6, and each n is independently the same or different, and is 1 to 1,000, preferably 2 to 500, more preferably 3 to 100, provided that the total of all values of n is greater than 4, or greater than 10, or greater than 20, or greater than 50, or greater than 100, or greater than 250.

Aspect 2. The polyimide oligomer of aspect 1, wherein the cation-anion complex comprises a cation X that is a substituted or unsubstituted tris(C₁₋₂₄ hydrocarbyl)ammonium, a substituted or unsubstituted tris(C₁₋₂₄ hydrocarbyl)phosphonium, a substituted or unsubstituted bis(C₁₋₂₄ hydrocarbyl)sulfonium, a substituted or unsubstituted imidazolium, a substituted or unsubstituted guanidinium, or a substituted or unsubstituted pyridinium; and an anion A that is Cl⁻, Br⁻, I⁻, a substituted or unsubstituted (C₁₋₂₄hydrocarbyl)carboxylate, HCO₃⁻, CO₃²⁻, CH₃SO₄⁻, HSO₄⁻, SO₄²⁻, H₂PO₄⁻, HPO₄²⁻, PO₄³⁻, NO₃⁻, p-toluenesulfonate, bis(trifluoromethanesulfonyl)imide, or a combination thereof.

Aspect 3. The polyimide oligomer of aspect 1 or 2, wherein t is 1 to 3, G is an anion, and Q is a substituted or unsubstituted tris(C₁₋₂₄ hydrocarbyl)ammonium, a substituted or unsubstituted tris(C₁₋₂₄ hydrocarbyl)phosphonium, or a substituted or unsubstituted bis(C₁₋₂₄ hydrocarbyl)sulfonium; or t is 1 to 3, d is 0, G is an anion, and Q is a substituted or unsubstituted imidazolium, a substituted or unsubstituted guanidinium, or a substituted or unsubstituted pyridinium; or t is 2, G is -O-, -C(O)-, -OC(O)-, -(O)CO-, -NHC(O)-, -(O)CNH-, -S-, -S(O)-, -S(O)₂-, -P(R^{a})(O)- wherein R^{a} is a C₁₋₈ alkyl or C₆₋₁₂ aryl, or a substituted or unsubstituted divalent C₁₋₂₀ hydrocarbon group; or G is a substituted or unsubstituted C₁₋₆₀ hydrocarbon group having a valence of t.

Aspect 4. The polyimide oligomer of any one or more of the preceding aspects, wherein d is 1, t is 1 to 3, m is 0, G is an anion, and Q is a substituted or unsubstituted tris(C₆₋₂₄ aryl)ammonium, or a substituted or unsubstituted tris(C₆₋₂₄ aryl)phosphonium; or d is 0, t is 1 to 3, m is 0, G is an anion, and Q is a substituted or unsubstituted imidazolium, a substituted or unsubstituted guanidinium, or a substituted or unsubstituted pyridinium; or m is 1, d is 0, t is 1 to 3, G is an anion, and Q is a substituted or unsubstituted tris(C₁₋₁₂ alkyl)ammonium, a substituted or unsubstituted tris(C₆₋₂₄ aryl)ammonium, a substituted or unsubstituted tris(C₁₋₁₂ alkyl)phosphonium, or a substituted or unsubstituted tris(C₆₋₂₄ aryl)phosphonium; or G is -O-, a substituted or unsubstituted C₁₋₂₀ alkylene, a substituted or unsubstituted C₃₋₈ cycloalkylene, a substituted or unsubstituted C₆₋₂₀ arylene, or a substituted or unsubstituted C₃₋₁₂ heteroarylene.

Aspect 5. The polyimide oligomer of any one or more of the preceding aspects, wherein q is 1, Q is a C₆₋₂₀ arylene, m is 1, and M is -O-.

Aspect 6. The polyimide oligomer of any one or more of the preceding aspects, wherein V is a group of the formulas (2), wherein W is -O-, -S-, -C(O)-, -SO₂-, -SO-,-P(R^{a})(=O)- wherein R^{a} is a C₁₋₈ alkyl or C₆₋₁₂ aryl, -C_{y}H_{2y}- wherein y is an integer from 1 to 5 or a halogenated derivative thereof, or a group of the formula -O-Z-O- wherein Z is an aromatic C₆₋₂₄ monocyclic or polycyclic moiety optionally substituted with 1 to 6 C₁₋₈ alkyl groups, 1 to 8 halogen atoms, or a combination thereof, provided that the valence of Z is not exceeded.

Aspect 7. The polyimide oligomer of any one or more of the preceding aspects, wherein the polyimide oligomer is a polyetherimide oligomer of the formula (1a), wherein each Z is independently an aromatic C₆₋₂₄ monocyclic or polycyclic moiety optionally substituted with 1 to 6 C₁₋₈ alkyl groups, 1 to 8 halogen atoms, or a combination thereof, provided that the valence of Z is not exceeded.

Aspect 8. The polyimide oligomer of aspect 7, wherein Z is a divalent group of the formula (5a), wherein J is -O-, -S-, -C(O)-, -SO₂-, -SO-, or -C_{y}H_{2y}- wherein y is an integer from 1 to 5 or a halogenated derivative thereof, preferably isopropylidene.

Aspect 9. The polyimide oligomer of aspect 8, wherein J is isopropylidene, at least one R is m-phenylene, and at least one R is phenylene-P(phenyl)₃-Br.

Aspect 10. The polyimide oligomer of any one or more of the preceding aspects, having one or more of the following properties: a T_{g} greater than 160°C, preferably 160 to 395°C, more preferably 180 to 280°C, still more preferably 200 to 250°C, as determined by differential scanning calorimetry; or a thermal decomposition temperature of greater than 450°C, preferably 480 to 600°C, more preferably 500 to 600°C, as determined at a 5% weight loss by thermogravimetric analysis; or a flame retardancy of V0 at a thickness of 1.6 mm, as measured according to ASTM D3801; or a char yield of greater that 50%, preferably greater than 55%, more preferably greater than 58%, as determined by thermogravimetric analysis in nitrogen at 980°C; or a tensile strength of greater than 70 megapascals, or 70 to 160 megapascals, preferably 80 to 140 megapascals, more preferably 90 to 130 megapascals, as determined by ASTM D638; or an elastic modulus of 2 to 5 gigapascals, preferably 2.3 to 3.8 gigapascals, more preferably 2.6 to 3.6 gigapascals, as determined by ASTM D882.

Aspect 11. A method for the manufacture of the polyimide oligomer of any one or more of the preceding aspects, the method comprising: reacting a diamine of the formula (7) with a dianhydride of the formula (6) and optionally a polyamine of the formula (8) in a solvent and under conditions effective to provide an anhydride-capped oligomer; and reacting the anhydride-capped oligomer with an amino compound of the formula (9) under conditions effective to provide the polyimide oligomer, wherein R¹ is a C₁₋₂₀ divalent bridging group, R² is a C₁₋₂₀ alkylene-XA or a C₆₋₃₀ arylene-XA wherein XA is a cation-anion complex, and G, Q, M, D, V, q, m, d, p, and t are as defined in any one or more of aspects 1 to 10.

Aspect 12. A method for the manufacture of the polyimide oligomer of any one or more of aspects 1 to 10, wherein the polyimide oligomer is a polyetherimide oligomer, the method comprising: reacting a diamine of the formula (7) with an anhydride of the formula (10) and optionally a polyamine of the formula (8) wherein X is a nitro group or halogen, to provide intermediate bis(phthalimide)s of the formulas (11a) and optionally (11b); reacting the bis(phthalimide)s with an alkali metal salt of a dihydroxy aromatic compound of the formula (12) wherein AM is an alkali metal, to provide an anhydride-capped oligomer; and reacting the anhydride-capped oligomer with an amino compound of the formula (9) under conditions effective to provide the polyetherimide oligomer, wherein R¹ is a C₁₋₂₀ divalent bridging group, R² is a C₁₋₂₀ alkylene-X or a C₆₋₃₀ arylene-XA wherein XA is a cation-anion complex, and G, Q, M, D, V, q, m, d, p, and t are as defined in any one or more of aspects 1 to 10.

Aspect 13. A polymer composition comprising: the polyimide oligomer of any one or more of aspects 1 to 10; and a second polymer different from the polyimide oligomer.

Aspect 14. An article comprising the polyimide oligomer of any one or more of aspects 1 to 10; preferably wherein the article is a film, a foam, a membrane, a conducting part, a fiber, a lens, a varnish, or a composite; more preferably wherein the article is an open cell foam, a closed cell foam, a nano-foam, a battery separator, an ion exchange membrane, tubing, a capillary, a coating, or a scratch resistant part.

Aspect 15. A method for manufacturing the article of aspect 14, preferably wherein the method comprises melt processing; more preferably melt extrusion, injection molding, thermoforming, roto-molding, additive manufacturing, or a combination thereof.

The compositions, methods, and articles can alternatively comprise, consist of, or consist essentially of, any appropriate components or steps herein disclosed. The compositions, methods, and articles can additionally, or alternatively, be formulated so as to be devoid, or substantially free, of any steps, components, materials, ingredients, adjuvants, or species that are otherwise not necessary to the achievement of the function or objectives of the compositions, methods, and articles.

The singular forms "a," "an," and "the" include plural referents unless the context clearly dictates otherwise. "Or" means "and/or" unless clearly indicated otherwise by context. The endpoints of all ranges directed to the same component or property are inclusive and independently combinable. Disclosure of a narrower range or more specific group in addition to a broader range is not a disclaimer of the broader range or larger group. "Combination thereof' as used herein is an open term and refers to a combination comprising one or more of the listed items, optionally with one or more like items not listed.

Unless defined otherwise, technical and scientific terms used herein have the same meaning as is commonly understood by one of skill in the art to which this disclosure belongs. A "combination" is inclusive of blends, mixtures, alloys, reaction products, and the like. "Hydrocarbyl" and "hydrocarbon" refer broadly to a group comprising carbon and hydrogen, optionally with 1 to 3 heteroatoms, for example, oxygen, nitrogen, halogen, silicon, sulfur, or a combination thereof; "alkyl" means a straight or branched chain, saturated monovalent hydrocarbon group; "alkylene" means a straight or branched chain, saturated, divalent hydrocarbon group; "alkylidene" means a straight or branched chain, saturated divalent hydrocarbon group, with both valences on a single common carbon atom; "alkenyl" means a straight or branched chain monovalent hydrocarbon group having at least two carbons joined by a carbon-carbon double bond; "cycloalkyl" means a non-aromatic monovalent monocyclic or multicyclic hydrocarbon group having at least three carbon atoms, "cycloalkenyl" means a non-aromatic cyclic divalent hydrocarbon group having at least three carbon atoms, with at least one degree of unsaturation; "aryl" and "arylene" mean a monovalent group and divalent group respectively containing at least one aromatic ring and optionally a nonaromatic ring, and having only carbon in the ring or rings; "alkylarylene" means an arylene group that has been substituted with an alkyl group; "arylalkylene" means an alkylene group that has been substituted with an aryl group as defined above; "heteroaryl" and "heteroarylene" mean a monovalent group and divalent group respectively wherein at least one carbon in a ring is replaced by a heteroatom (S, O, P, or N); "carboxylate" is a group of the formula R-COO⁻ wherein R is hydrocarbyl; "alkoxy" means an alkyl group attached through an oxygen bridge (-O-); and "aryloxy" means an aryl group with the indicated number of carbon atoms attached through an oxygen bridge (-O-).

Unless otherwise indicated, each of the foregoing groups can be unsubstituted or substituted, provided that the substitution does not significantly adversely affect synthesis, stability, or use of the compound. "Substituted" as used herein means that at least one hydrogen on the designated atom or group is replaced with another group, provided that the designated atom's normal valence is not exceeded. Exemplary groups that can be present on a "substituted" position include, but are not limited to, cyano; hydroxyl; nitro; alkanoyl (such as a C₂₋₆ alkanoyl group such as acyl); carboxamido; C₁₋₆ or C₁₋₃ alkyl, cycloalkyl, alkenyl, and alkynyl (including groups having at least one unsaturated linkages and from 2 to 8, or 2 to 6 carbon atoms); C₁₋₆ or C₁₋₃ alkoxy; C₆₋₁₀ aryloxy such as phenoxy; C₁₋₆ alkylthio; C₁₋₆ or C₁₋₃ alkylsulfinyl; C₁₋₆ or C₁₋₃ alkylsulfonyl; amino di(C₁₋₆ or C₁₋₃)alkyl; C₆₋₁₂ aryl having at least one aromatic ring (e.g., phenyl, biphenyl, naphthyl, or the like); C₇₋₁₉ arylalkylene having 1 to 3 separate or fused rings; or C₇₋₁₉ arylalkyleneoxy having 1 to 3 separate or fused rings, with benzyloxy being an exemplary arylalkyleneoxy. When a group is substituted, the indicated number of carbon atoms includes the substituent.

All cited patents, patent applications, and other references are incorporated herein by reference in their entirety. However, if a term in the present application contradicts or conflicts with a term in the incorporated reference, the term from the present application takes precedence over the conflicting term from the incorporated reference.

While particular aspects have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

## Claims

1. A polyimide oligomer of the formula 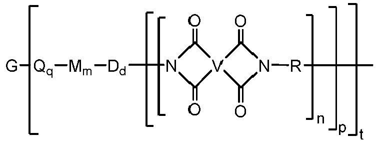 wherein
G is a group having a valence of t and is connected by a covalent bond or an ionic bond, each Q is independently the same or different, and is a cation or a substituted or unsubstituted divalent C₁₋₆₀ hydrocarbon group,
each M is independently the same or different, and is a substituted or unsubstituted divalent C₁₋₆₀ hydrocarbon group, -O-, -C(O)-, -OC(O)-, -OC(O)O-, -NHC(O)-, -(O)CNH-, -S-, -S(O)-, or -S(O)₂-,
D is a phenylene,
each V is independently the same or different, and is a tetravalent C₄₋₄₀ hydrocarbon group,
each R is independently the same or different, and is a C₁₋₂₀ divalent bridging group, a C₁₋₂₀ alkylene-X, or a C₆₋₃₀ arylene-XA wherein XA is a cation-anion complex, provided that at least one R is C₁₋₂₀ alkylene-XA or C₆₋₃₀ arylene-XA,
q is 0 or 1, m is 0 or 1, d is 0 or 1, p is 1 or 2, t is 1 to 6, and
each n is independently the same or different, and is 1 to 1,000, preferably 2 to 500, more preferably 3 to 100, provided that the total of all values of n is greater than 4, or greater than 10, or greater than 20, or greater than 50, or greater than 100, or greater than 250.

2. The polyimide oligomer of claim 1, wherein the cation-anion complex comprises:
a cation X that is a substituted or unsubstituted tris(C₁₋₂₄ hydrocarbyl)ammonium, a substituted or unsubstituted tris(C₁₋₂₄ hydrocarbyl)phosphonium, a substituted or unsubstituted bis(C₁₋₂₄ hydrocarbyl)sulfonium, a substituted or unsubstituted imidazolium, a substituted or unsubstituted guanidinium, or a substituted or unsubstituted pyridinium; and
an anion A that is Cl⁻, Br⁻, I⁻, a substituted or unsubstituted (C₁₋₂₄ hydrocarbyl)carboxylate, HCO₃⁻, CO₃²⁻, CH₃SO₄⁻, HSO₄⁻, SO₄²⁻, H₂PO₄⁻, HPO₄²⁻, PO₄³⁻, NO₃⁻, p-toluenesulfonate, bis(trifluoromethanesulfonyl)imide, or a combination thereof.

3. The polyimide oligomer of claim 1 or 2, wherein
t is 1 to 3, G is an anion, and Q is a substituted or unsubstituted triS(C₁₋₂₄ hydrocarbyl)ammonium, a substituted or unsubstituted tris(C₁₋₂₄ hydrocarbyl)phosphonium, or a substituted or unsubstituted bis(C₁₋₂₄ hydrocarbyl)sulfonium; or
t is 1 to 3, d is 0, G is an anion, and Q is a substituted or unsubstituted imidazolium, a substituted or unsubstituted guanidinium, or a substituted or unsubstituted pyridinium; or
t is 2, G is -O-, -C(O)-, -OC(O)-, -(O)CO-, -NHC(O)-, -(O)CNH-, -S-, -S(O)-, -S(O)₂-, -P(R^{a})(O)- wherein R^{a} is a C₁₋₈ alkyl or C₆₋₁₂ aryl, or a substituted or unsubstituted divalent C₁₋₂₀ hydrocarbon group; or
G is a substituted or unsubstituted C₁₋₆₀ hydrocarbon group having a valence of t.

4. The polyimide oligomer of any one or more of the preceding claims, wherein
d is 1, t is 1 to 3, m is 0, G is an anion, and Q is a substituted or unsubstituted tris(C₆₋₂₄ aryl)ammonium, or a substituted or unsubstituted tris(C₆₋₂₄ aryl)phosphonium; or
d is 0, t is 1 to 3, m is 0, G is an anion, and Q is a substituted or unsubstituted imidazolium, a substituted or unsubstituted guanidinium, or a substituted or unsubstituted pyridinium; or
m is 1, d is 0, t is 1 to 3, G is an anion, and Q is a substituted or unsubstituted tris(C₁₋₁₂ alkyl)ammonium, a substituted or unsubstituted tris(C₆₋₂₄ aryl)ammonium, a substituted or unsubstituted tris(C₁₋₁₂ alkyl)phosphonium, or a substituted or unsubstituted tris(C₆₋₂₄ aryl)phosphonium; or
G is -O-, a substituted or unsubstituted C₁₋₂₀ alkylene, a substituted or unsubstituted C₃₋₈ cycloalkylene, a substituted or unsubstituted C₆₋₂₀ arylene, or a substituted or unsubstituted C₃₋₁₂ heteroarylene.

5. The polyimide oligomer of any one or more of the preceding claims, wherein q is 1, Q is a C₆₋₂₀ arylene, m is 1, and M is -O-.

6. The polyimide oligomer of any one or more of the preceding claims, wherein V is a group of the formula 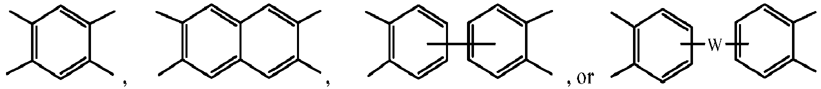 wherein W is -O-, -S-, -C(O)-, -SO₂-, -SO-, -P(R^{a})(=O)- wherein R^{a} is a C₁₋₈ alkyl or C₆₋₁₂ aryl, - C_{y}H_{2y}- wherein y is an integer from 1 to 5 or a halogenated derivative thereof, or a group of the formula -O-Z-O- wherein Z is an aromatic C₆₋₂₄ monocyclic or polycyclic moiety optionally substituted with 1 to 6 C₁₋₈ alkyl groups, 1 to 8 halogen atoms, or a combination thereof, provided that the valence of Z is not exceeded.

7. The polyimide oligomer of any one or more of the preceding claims, wherein the polyimide oligomer is a polyetherimide oligomer of the formula 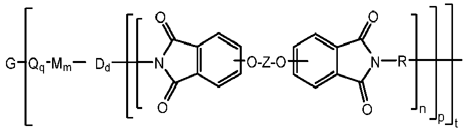 wherein each Z is independently an aromatic C₆₋₂₄ monocyclic or polycyclic moiety optionally substituted with 1 to 6 C₁₋₈ alkyl groups, 1 to 8 halogen atoms, or a combination thereof, provided that the valence of Z is not exceeded.

8. The polyimide oligomer of claim 7, wherein Z is a divalent group of the formula 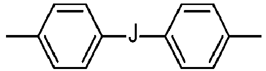 wherein J is -O-, -S-, -C(O)-, -SO₂-, -SO-, or -C_{y}H_{2y}- wherein y is an integer from 1 to 5 or a halogenated derivative thereof, preferably isopropylidene.

9. The polyimide oligomer of claim 8, wherein J is isopropylidene, at least one R is m-phenylene, and at least one R is phenylene-P(phenyl)₃-Br.

10. The polyimide oligomer of any one or more of the preceding claims, having one or more of the following properties:
a T_{g} greater than 160°C, preferably 160 to 395°C, more preferably 180 to 280°C, still more preferably 200 to 250°C, as determined by differential scanning calorimetry; or
a thermal decomposition temperature of greater than 450°C, preferably 480 to 600°C, more preferably 500 to 600°C, as determined at a 5% weight loss by thermogravimetric analysis; or
a flame retardancy of V0 at a thickness of 1.6 mm, as measured according to ASTM D3801; or
a char yield of greater that 50%, preferably greater than 55%, more preferably greater than 58%, as determined by thermogravimetric analysis in nitrogen at 980°C; or
a tensile strength of greater than 70 megapascals, or 70 to 160 megapascals, preferably 80 to 140 megapascals, more preferably 90 to 130 megapascals, as determined by ASTM D638; or
an elastic modulus of 2 to 5 gigapascals, preferably 2.3 to 3.8 gigapascals, more preferably 2.6 to 3.6 gigapascals, as determined by ASTM D882.

11. A method for the manufacture of the polyimide oligomer of any one or more of the preceding claims, the method comprising:
reacting
a diamine of the formula
H₂N-R¹-NH₂
with a dianhydride of the formula 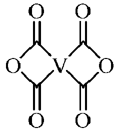 and optionally a polyamine of the formula 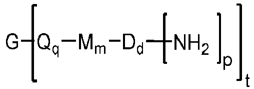 in a solvent and under conditions effective to provide an anhydride-capped oligomer; and
reacting the anhydride-capped oligomer with an amino compound of the formula
H₂N-R²
under conditions effective to provide the polyimide oligomer, wherein R¹ is a C₁₋₂₀ divalent bridging group, R² is a C₁₋₂₀ alkylene-XA or a C₆₋₃₀ arylene-XA wherein XA is a cation-anion complex, and G, Q, M, D, V, q, m, d, p, and t are as defined in any one or more of claims 1 to 10.

12. A method for the manufacture of the polyimide oligomer of any one or more of claims 1 to 10, wherein the polyimide oligomer is a polyetherimide oligomer, the method comprising:
reacting
a diamine of the formula
H₂N-R¹-NH₂
with an anhydride of the formula 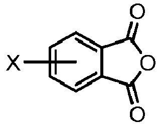 and optionally a polyamine of the formula 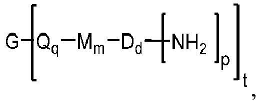
wherein X is a nitro group or halogen, to provide intermediate bis(phthalimide)s of the formulas 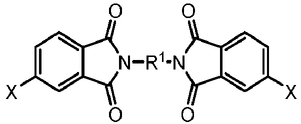 and optionally 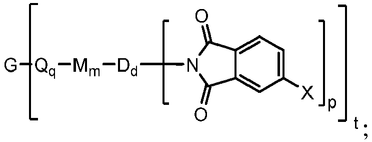
reacting the bis(phthalimide)s with an alkali metal salt of a dihydroxy aromatic compound of the formula
AMO-Z-OAM
wherein AM is an alkali metal, to provide an anhydride-capped oligomer; and
reacting the anhydride-capped oligomer with an amino compound of the formula
H₂N-R²
under conditions effective to provide the polyetherimide oligomer, wherein R¹ is a C₁₋₂₀ divalent bridging group, R² is a C₁₋₂₀ alkylene-X or a C₆₋₃₀ arylene-XA wherein XA is a cation-anion complex, and G, Q, M, D, V, q, m, d, p, and t are as defined in any one or more of claims 1 to 10.

13. A polymer composition comprising:
the polyimide oligomer of any one or more of claims 1 to 10; and
a second polymer different from the polyimide oligomer.

14. An article comprising the polyimide oligomer of any one or more of claims 1 to 10; preferably wherein the article is a film, a foam, a membrane, a conducting part, a fiber, a lens, a varnish, or a composite; more preferably wherein the article is an open cell foam, a closed cell foam, a nano-foam, a battery separator, an ion exchange membrane, tubing, a capillary, a coating, or a scratch resistant part.

15. A method for manufacturing the article of claim 14, preferably wherein the method comprises melt processing; more preferably melt extrusion, injection molding, thermoforming, roto-molding, additive manufacturing, or a combination thereof.
